# EUROPEAN PATENT APPLICATION

(11) **EP 1 637 832 A1**
(43) Date of publication of application: **22.03.2006**
(21) Application number: 04425679.0
(22) Date of filing: 14.09.2004
(51) Int. Cl.: G01B 5/00

(54) **Device for rapid alignment of a two-wheeled vehicle frame**

(71) Applicant: Gallucci, Angela, 20135 Milano (IT)
(72) Inventor: Scardino, Gino, 20131 Milano (IT)
(74) Representative: Riccardi, Sergio

(57) **Abstract**

The present invention is about a device for rapid alignment of the frames of two-wheeled vehicles like bicycles, motorcycles or similar, comprising at least a signal emitting group (1) having at least a signal emitting element (15) installed on a rod (7) of said at least a signal emitting group (1), and one or more check groups (39, 55), each of said check groups (39, 55) being provided with at least a receiving element (49, 73) able to receive said signal emitted by said signal emitting element (15). The rod (7) of the signal emitting group (1) is directly fixed on the fulcrum (3), or main or reference axis, of the two-wheeled vehicle frame (5), so that the axis of the rod (7) of said signal emitting group (1) is coincident with the frame (5) main or reference axis, said signal emitting element (15) being capable of emitting a signal which is exactly perpendicular to the axis of the rod (7) coincident with the frame (5) main or reference axis. The signal emitting group (1) and the one or more check groups (39, 55) respectively comprise dismountable adapters, which allow to directly couple the different group with the desired reference points of a plurality of frames (5) of different two-wheeled vehicles, to evaluate, control and measure geometric quantities, comprising length, inclinations, distances and other data referred to the parallelism between the different components of a motorcycle frame, or other equivalent two-wheeled vehicles.

## Description

The present invention relates to a device for rapid alignment of the frame of two-wheeled vehicles, like bicycles, motorcycles or similar.

Since vehicle frames in general, in particular of high-performances motorcycles, have a basic role for the vehicle stability and the safety of the passenger, it is necessary that these frames are always perfectly adjusted, this meaning that the geometric requirements imposed by the project to said frames should never change during the operative lifetime of the vehicle. However, after vehicle collisions even of slight extent, falls, or due to the clearances that occur with time, when the vehicle is normally used, between the different components forming the frame, misalignments which can compromise the correct operation of said vehicle are formed, and it is thus necessary to have at disposal devices able to restore the initial project conditions of the frame.

Moreover, in sport races, it is particularly felt the necessity to have at disposal instruments able to rapidly operate modifications on motorcycle frames and other components, to adapt them from time to time to the conditions of the circuit on which the race takes place, in order to obtain the best possible performances.

Therefore, devices for measuring geometric quantities of frames are known, of the kind comprising an optically beam emitter, to be fixed in a determined point of the frame, and one or more elements able to receive the signal emitted by said optically beam emitter, placed in their turn on those parts of the frame for which a check or an adjustment with respect to the initial project conditions is requested.

Document EP 0 846 944, of the same applicant, discloses a device comprising a laser beam emitting element or similar, to be positioned on the steering tube of a motorcycle, and one or more check members for receiving the laser signal, able to indicate the status and the possible misalignment of the frame points on which said check members are positioned.

Document EP 0 704 671 illustrates a device for measuring frame quantities, in particular of bicycles, comprising a U-shaped structure on which light beam emitting elements are disposed and having coupling elements to the main reference axis of the frame.

However, the latter device is not very practical to use, because the U-shaped structure which comprises the measuring means is not adaptable to all different kinds of frames. Moreover, with this and other prior art devices it is necessary to dismount some parts of the vehicle before installing said device and proceeding with the different measurements.

Therefore, it is an object of the present invention to provide for a device for rapid alignment of two-wheeled vehicle frames, particularly but not exclusively motorcycles, which is as precise but contemporarily practical, economic and compact as possible.

It is another object of the present invention to provide for a device which enables all the components forming it to be mounted and fixed on the vehicle, in order to perform the necessary alignments, without needing to dismount any component of said vehicle, allowing rapid measurements and/or checks and not requiring the aid of complex equipments or skilled personnel.

It is a further object of the invention to provide for a device capable of being easily installed on a particular reference point of a two-wheeled vehicle frame which allow to ensure the maximum accuracy in the measurements and/or checks, that is the main reference axis of said frame, which is the best point for controlling the centre lines.

The device according to the invention has the features set forth in the independent claim 1. Further advantageous features of said device are set forth in the dependent claims.

Characteristics and advantages of the invention will be better described in greater detail hereinafter, also with the aid of the annexed drawings, which show a not limiting embodiment of the invention. Obviously, the same reference numbers in the different figures show the same or equivalent components.
Figure 1 is a schematic side view of a motorcycle frame on which the different components of the device for rapid alignment according to the invention are applied;
Figure 2 is a partial sectional view of an embodiment of the emitting group belonging to the device for rapid alignment according to the invention;
Figure 3 is a partial sectional view of an embodiment of a first receiving group belonging to the device for rapid alignment according to the invention, mounted on the steering tube of a motorcycle; and
Figure 4 is a partial sectional view of an embodiment of a second receiving group belonging to the device for rapid alignment according to the invention, mounted at the wheel stock of a motorcycle.

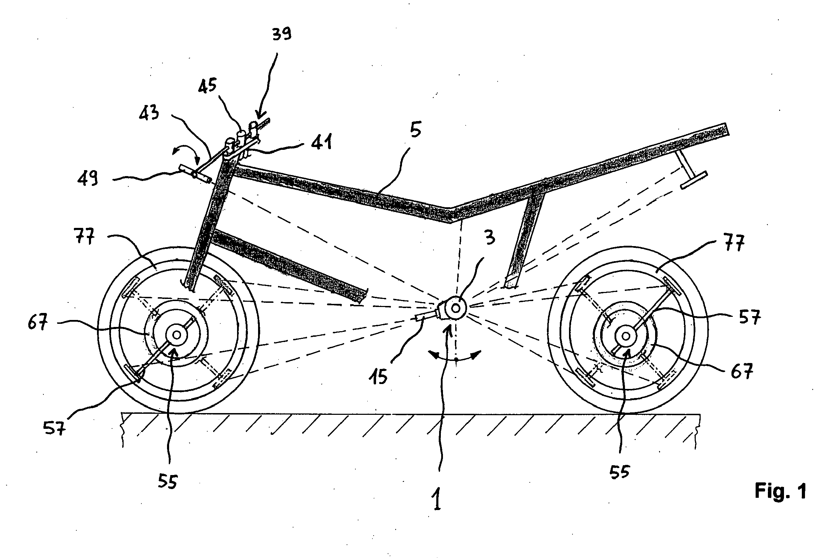

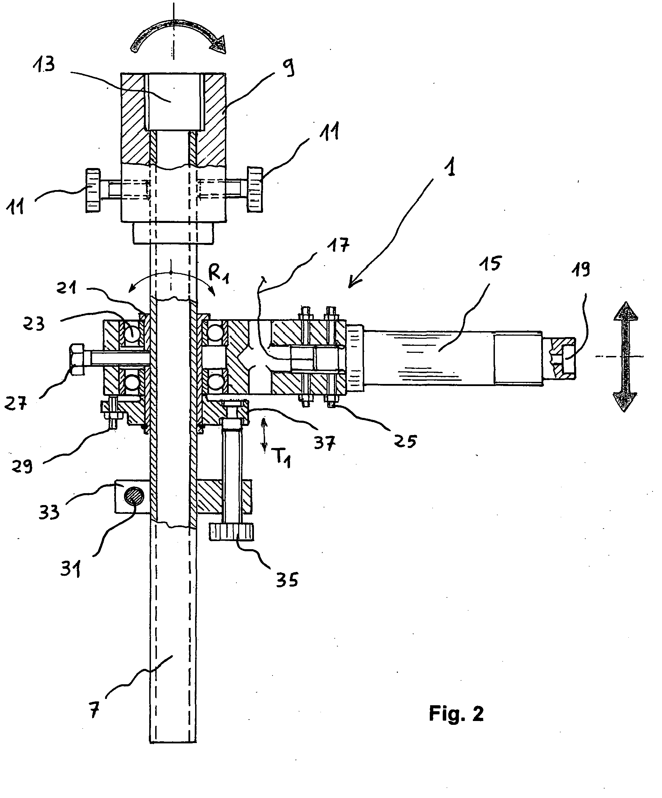

According to a preferred embodiment of the device for rapid alignment of two-wheeled vehicle frames, it is composed by an emitting element or group 1 (Figures 1 and 2), predisposed to be fixed on the fulcrum 3 or main axis of a two-wheeled vehicle frame 5, in particular a motorcycle.

Said emitting group 1 (Figure 2) comprises a rod 7, on one end of which an adapter 9 is mounted, provided with clamping screws 11 for fixing said adapter 9 to said rod 7. The adapter 9 is furthermore provided with a hole 13, which allows the coupling of the whole emitting group 1 directly to the locking bolt which is placed on the fulcrum 3 of the frame 5 of several motorcycles. It is thus evident that numerous adapters 9 could be used, each with a hole 13 of different shape and size, properly configured to be adapted to locking bolts of the frames of different motorcycles present on the market.

Alternatively, for those frames in which locking bolts at their fulcrum 3 are not present, the adapter 9 can be provided with expansion bolts, screws, magnets or other proper mechanical and/or hydraulic fixing means, which allow in any case a safe and precise clamping of the emitting group 1 to the vehicle frame 5, so that the main axis of the rod 7 and thus of the whole emitting group 1 is coincident anyhow with the frame 5 reference axis, at its fulcrum 3.

A light beam emitting element 15, preferably a laser diode, although other similar devices could also be used, is furthermore installed on the emitting group 1. The laser 15, provided with an electric wire 17 for its feeding and with an outlet hole 19 for the light beam, is able both to rotate of 360° in direction R₁ and to translate in direction T₁ with respect to the axis of the rod 7, thanks to the presence of a sleeve 21, preferably equipped with bearings 23, which surrounds said rod 7 and which also acts as a support for said laser 15 fixed to said sleeve 21 with proper fixing means 25. The peculiar constructional feature of said laser 15 is that of emitting a light beam which is exactly perpendicular to the axis determined by the rod 7, and thus to the reference axis of the frame 5.

The free rotation of the sleeve 21, and consequently of the laser 15, around the rod 7 can be blocked by the proper rotation setscrew 27, which directly acts on the surface of said rod 7. To obtain small rotary movements of the laser 15, of few degrees or some hundredth parts of a degree, a rotation adjusting screw 29 could also be advantageously present, allowing to dispose the laser 15 in the desired position in an extremely precise manner.

The laser 15 translation along the rod 7 can be blocked acting on a proper translation setscrew 31, which operates on a clamp 33 assembled around said rod 7. A displacement adjusting screw 35, fixed to one end of a protrusion 37 obtained on the sleeve 21, is furthermore connected to said clamp 33, said displacement adjusting screw 35 allowing the micrometrical adjustment of the laser 15 translation along the rod 7, for a correct disposition of said laser 15 once the clamp 33 is blocked in position.

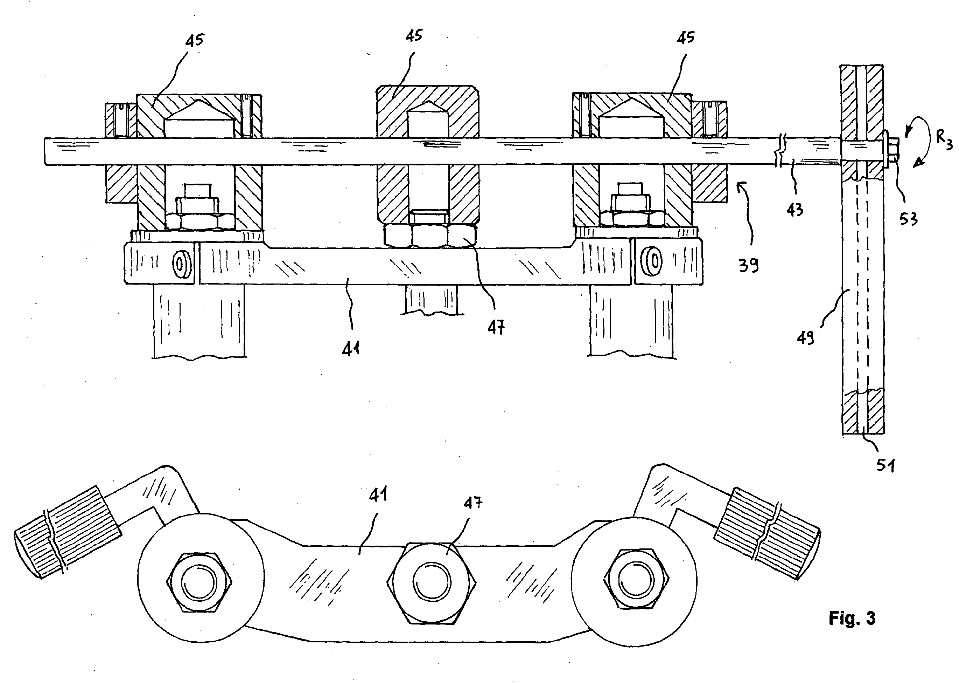

In Figure 3 a first type of receiving or check group 39 belonging to the device for rapid alignment of two-wheeled vehicles frames according to the present invention is disclosed. Said check group 39, able to receive the light beam of the laser 15, is configured to be directly positioned and fixed on the steering tube 41 of the motorcycle or the vehicle on which the checks and/or measurements have to be performed, without requiring to dismount and to remove any component of said motorcycle.

The check group 39 thus comprises a bar 43 on which one or more adapters such as 45 can be mounted, for coupling in position said check group 39 with the stop nut or the stop nuts 47 of the motorcycle steering tube 41 upper plate. Similarly to what happens for the adapter 9 present on the emitting group 1, several adapters 45 are provided, properly fitted in order to allow the coupling of the check group 39 with a plurality of steering tubes 41 belonging to motorcycles of different brand and model. Furthermore, in case it is not possible to couple the check group 39 with the steering tube 41 in the manner described so far, it is possible to adopt a similar fixing system, for instance magnetic, mechanical, with cams, expansive hydraulic or similar, as long as it allows anyway to said check group 39 to remain parallel to the steering tube 41 upper plate or, in an equivalent manner, to be perpendicular to the two front fork stems of the motorcycle.

The check group 39 furthermore comprises a receiving element 49 for the light beam emitted by the laser 15, obviously disposed on the same side of the motorcycle frame on which the emitting group 1, comprising said laser 15, is placed too. Said receiving element 49 can consists of a preferably graduated rod of linear shape, T-shaped or L-shaped, furthermore provided with a through hole 51 so that the light beam emitted by the laser 15 can pass therethrough. The rod 49 is thus free to rotate of 360° in direction R₃ around the axis of the bar 43, being possible its blockage in position on said bar 43 by means of a stop nut 53 or a similar fixing means, so that it is possible to obtain the alignment of the light beam directrix with the through hole 51.

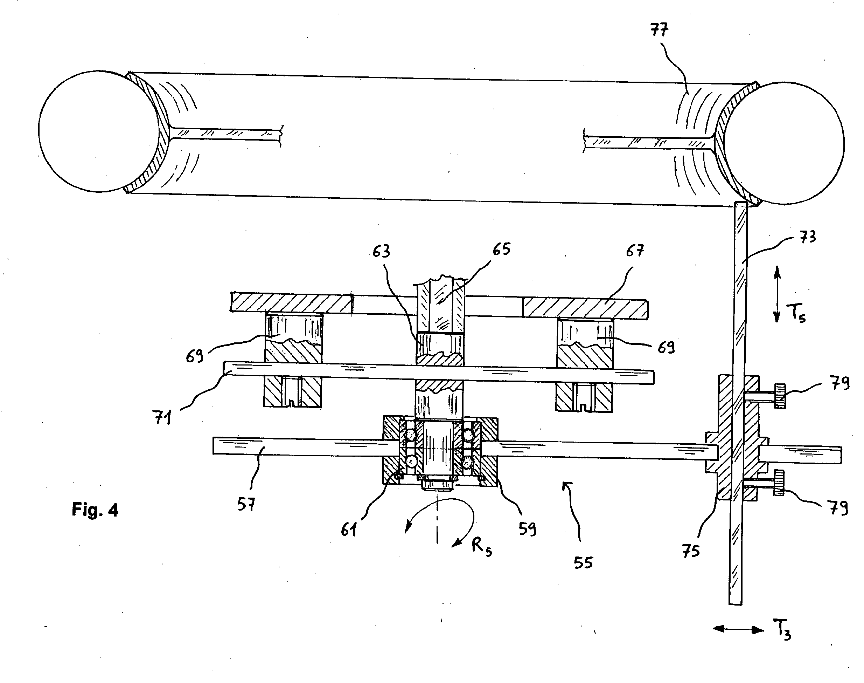

In addition or in alternative to the check group 39 described so far, in order to perform measurements and/or adjustments related to wheels, rims, brake discs and more generally to the position of the front and rear forks (front and rear axle) of the motorcycle, always in relationship with the reference position determined by the frame 5 main axis and thus by the emitting group 1, a further check group 55 (Figure 4) can be used.

Said check group 55 comprises a bar 57 fixed to a member 59, preferably provided with bearings 61 to allow its rotation R₅ of 360° around a shaft 63 which makes possible the coupling, by means of a proper adapter provided with mechanical, magnetic or other fixing means, of the whole check group 55 with the hub 65 of the motorcycle wheel, so that the hub 65 axis coincides with the shaft 63 axis.

The check group 55, instead of being coupled with the wheel hub 65, can also be directly fixed to the brake disc 67 of the motorcycle, by means of one or more magnets such as 69, in order to verify possible misalignments of said brake disc 67 with respect to the frame 5 main axis. In case more than one magnet is present, it can be convenient the employment of a little rod 71, adapted to be parallel to the plane on which the brake disc 67 lies, for a better accuracy in the verification of possible deformations of said brake disc 67.

The check group 55 is furthermore provided with a preferably graduated rod 73, with a similar function of receiving element of the laser 15 light beam as it happens for the aforementioned rod 49. Said graduated rod 73 is fixed to the bar 57 by means of a clamp 75, which allows the mutual translation of the rod 73 with respect to the bar 57 (along the direction T₃) and of the bar 57 with respect to the rod 73 (along the direction T₅), in order to perform measurements and/or checks related to the motorcycle rim 77. To block said translational displacement, once reached the desired trim of the component belonging to the check group 55, one or more clamping screws such as 79 are provided on the clamp 75.

Alternatively to the check group 55 described so far, to simply check the alignment of the brake discs 67 only and, more precisely, to control their possible deformation, it is also possible to directly install on said brake disc 67 surface, by means of magnets, one or more graduated bars (not shown in the drawings) for receiving the light beam, so that said one or more graduated bars result perpendicular to the brake disc 67 plane.

The operation of the device for rapid alignment of two-wheeled vehicles frames according to the present invention will be now briefly explained, together with some examples of the possible checks and/or measurements which can be performed with said device.

Once the emitting group is installed as an extension of the locking bolt on the frame 5 fulcrum, as shown in Figure 1, the fixing of the correspondent check assembly is performed, for example the check group 39 on the steering tube 41, the receiving element 49 of said check group 39 being at a predetermined distance from the theoretical centre line of the vehicle, obtained according to the data, which can also be inserted in an electronic database, supplied by the constructor.

At this point, the laser 15 support group could be translated and/or rotated with respect to the rod 7, so that it becomes a projection of the centre line too. This is obtained when the reference line consisting of the laser beam will pass inside the through hole 51 obtained in the receiving element 49 belonging to the check group 39. This passage will be an index of the correct centre line and perpendicularity and, with a proper system for checking the generated angle, will furnish as a result the axle base of the vehicle in the considered point.

Once the reference point of the centre line referred to the steering tube has been found, by the passage of the laser beam inside the through hole 51, the emitting group 1 is maintained in the found position and it is possible to proceed with measurements for instance related to the rims 77, using the check group 55. Using as a reference the distance from the centre line, the distance from the centre of the rims 77 is measured, and their position is then established by projecting the laser beam in the four positions at 90° determined by the graduated rod 73 on the rim 77 edge, as shown in Figure 1.

Using the graduated rod 73 of the check group 55 it is also possible to control any misalignment of the rim 77. After that the correct distance of the rim 77 outer edge from the bar 57 has been set, by proper translation in direction T₅ of the graduated rod 73, so that said rod 73 leans on said rim's edge (see Figure 4), it is checked that such condition is valid in all the points of the rim 77. Otherwise, it has to proceed with the proper adjustments on the rim 77 to obtain its perfect alignment.

Therefore, it should be understood that the device for rapid alignment of two-wheeled vehicles frames described so far brilliantly achieves the intended purposes, providing for a valid, precise, economic, practical and light instrument to evaluate, control and measure geometric quantities, comprising length, inclinations, distances and other data referred to the parallelism between the different components of a motorcycle frame, or other equivalent two-wheeled vehicles, in particular for performing rapid alignments between said components.

The device for rapid alignment according to the invention could also be supported by an electronic database, containing the project values of the geometric quantities of several frames, directly supplied by the manufacturers of said frames, in order to make even more rapid and efficient the measurements.

Although the invention has been disclosed and shown only with reference to its particular embodiments and it has been mentioned its particular application on a motorcycle, it will be clear for a skilled in the art that various changes, variations, replacements and additions of parts with other functionally equivalent components could be made, without departure from the scope of protection defined by the appended claims. Therefore, for example, although the preferred embodiment of the invention makes use of a laser instrument, it could be validly replaced with optical and/or mechanical instruments having the same function, like Doppler-effect distance sensors, photodiodes, digital cameras or the like. In the same way, the number and the disposition of the different check groups and their coupling system to the different vehicle parts could change, according to said vehicle's type and to the desired measurements and/or verifications to be performed.

## Claims

1. A device for rapid alignment of the frames of two-wheeled vehicles, comprising at least a signal emitting group (1) having at least a signal emitting element (15) installed on a rod (7) of said at least a signal emitting group (1), and one or more check groups (39, 55), each of said check groups (39, 55) being provided with at least a receiving element (49, 73) able to receive said signal emitted by said signal emitting element (15), **characterized in that** said rod (7) of said at least a signal emitting group (1) is directly fixed on the fulcrum (3), or main or reference axis, of said two-wheeled vehicle frame (5), so that the axis of said rod (7) of said signal emitting group (1) is coincident with said frame (5) main or reference axis, said signal emitting element (15) being capable of emitting a signal which is exactly perpendicular to the axis of said rod (7) coincident with said frame (5) main or reference axis.

2. The device according to claim 1, **characterized in that** said signal emitting group (1) comprises at least a dismountable adapter (9), provided with proper mechanical, hydraulic and/or magnetic fixing means, which allows the coupling of said rod (7) of said signal emitting group (1) with the fulcrum (3), or main or reference axis, of a plurality of frames (5) of different two-wheeled vehicles.

3. The device according to claim 1, **characterized in that** said signal emitting element (15) is provided with a sleeve (21) which surrounds said rod (7), able both to put in rotation of 360° said signal emitting element (15) around said rod (7) and to put in translation said signal emitting element (15) in direction (T₁) along said rod (7) of said signal emitting group (1).

4. The device according to claim 3, **characterized in that** the free rotation of said signal emitting element (15) around said rod (7) can be blocked by one or more rotation setscrew (27), which directly act on the surface of said rod (7).

5. The device according to claim 3, **characterized in that** said signal emitting element (15) can be provided with one or more rotation adjusting screws (29), which allow to dispose said signal emitting element (15) in the desired position in an extremely precise manner.

6. The device according to claim 3, **characterized in that** the translation of said signal emitting element (15) along said rod (7) can be blocked by one or more translation setscrews (31), which operates on a clamp (33) assembled around said rod (7).

7. The device according to claim 3, **characterized in that** the translation of said signal emitting element (15) can be provided with one or more displacement adjusting screws (35), fixed to one end of said sleeve (21), said displacement adjusting screws (35) allowing the micrometrical adjustment of said signal emitting element (15) translation along said rod (7).

8. The device according to claim 1, **characterized in that** said check group (39) is configured to be directly positioned and fixed on the steering tube (41) of said two-wheeled vehicle, so that said check group (39) remains parallel to said steering tube (41) upper plate or, in an equivalent manner, remains perpendicular to the two front fork stems of said two-wheeled vehicle.

9. The device according to claim 8, **characterized in that** said check group (39) comprises at least a bar (43), on which one or more adapters (45), provided with magnetic, mechanical, with cams, expansive hydraulic or similar fixing means, can be mounted, properly shaped in order to allow the coupling of said check group (39) with a plurality of steering tubes (41) of different two-wheeled vehicles.

10. The device according to claim 8, **characterized in that** said receiving element (49) of said check group (39) can consists of a preferably graduated rod of linear shape, T-shaped or L-shaped, free to rotate around the axis of said bar (43).

11. The device according to claim 10, **characterized in that** said rod (49) is provided with at least a through hole (51), so that the signal emitted by said signal emitting element (15) can pass therethrough.

12. The device according to claim 10, **characterized in that** said rod (49) can be blocked in position on said bar (43) by means of at least a stop nut (53), so that it is possible to obtain the alignment of the signal emitted by said signal emitting element (15) with said through hole (51).

13. The device according to claim 1, **characterized in that** said check group (55) comprises at least a bar (57) fixed to a member (59), said member (59) allowing the rotation of 360° of said check group (55) around a shaft (63).

14. The device according to claim 13, **characterized in that** said receiving element (73) of said check group (55) is a preferably graduated rod, fixed to said bar (57) by means of at least a clamp (75) which allows the mutual translation of said rod (73) with respect to said bar (57) in (T₃) and (T₅) directions.

15. The device according to claim 13, **characterized in that** the mutual translation of said rod (73) with respect to said bar (57) can be blocked by one or more clamping screws such as (79) provided on said at least a clamp (75).

16. The device according to claim 13, **characterized in that** said shaft (63) makes possible the coupling, by means of a proper adapter, of said check group (55) with the hub (65) of said two-wheeled vehicle wheel, so that the axis of said hub (65) coincides with the axis of said shaft (63).

17. The device according to claim 13, **characterized in that** said check group (55) is directly fixed to the brake disc (67) of said two-wheeled vehicle, by means of one or more magnets (69), in order to verify possible misalignments of said brake disc (67) with respect to the main or reference axis of the frame (5).

18. The device according to claim 1, **characterized in that** said check group (55) comprises one or more graduated bars for receiving the signal emitted by said signal emitting element (15), said one or more graduated bars being directly mounted on the surface of said two-wheeled vehicle brake disc (67), so that said one or more graduated bars result perpendicular to the plane of said brake disc (67).

19. The device according to any of the preceding claims, **characterized in that** said signal emitting element (15) is a light beam emitter.

20. The device according to claim 19, **characterized in that** said signal emitting element (15) is a laser diode.

21. The device according to any of the preceding claims, **characterized by** comprising an electronic database, containing the project values of the geometric quantities of several frames (5), in order to make even more rapid and efficient the measurements on said frames (5).
